# EUROPÄISCHE PATENTANMELDUNG

(11) **EP 3 816 621 A1**
(43) Veröffentlichungstag der Anmeldung: **05.05.2021**
(21) Anmeldenummer: 19206221.4
(22) Anmeldetag: 30.10.2019
(51) Int. Cl.: G01N 29/04, B29C 65/82, G01N 29/22, G01N 29/265, G01N 29/28

(54) **PRÜFUNG EINER MUFFENSCHWEISSUNG**

(71) Anmelder: Georg Fischer Rohrleitungssysteme AG, 8201 Schaffhausen (CH)
(72) Erfinder: Wermelinger, Jörg, 8200 Schaffhausen (CH); Barbone, Riccardo, 8200 Schaffhausen (CH); Kaftan, Paul, 78078 Niedereschach (DE)
(74) Vertreter: Fenner, Seraina

(57) **Zusammenfassung**

Verfahren und Vorrichtung zur Ultraschallprüfen einer Schweissung einer Elektroschweissmuffe (10) für Kunststoffrohre (11) mit den folgenden Schritten:
• Befestigen einer Prüfvorrichtung (1) am Aussenumfang des verschweissten Kunststoffrohres (11) beinhaltend ein rundum verlaufendes Befestigungselement (2), eine Halterung (3), wobei die Halterung (3) vorzugsweise einen Support (7), einen Träger (8) und einen Greifer (9) aufweist und ein Leitelement mit einer Aussparung,
• Einspeisen einer Flüssigkeit in die Aussparung (5) des Leitelements (4) vorzugsweise Wasser,
wobei die Aussparung (5) im Leitelement (4) komplett mit der Flüssigkeit gefüllt wird und eine konstante Flüssigkeitssäule während der Ultraschallprüfung im Leitelement (4) aufrecht gehalten wird um den Ultraschall zu übertragen.

## Beschreibung

Die Erfindung betrifft ein Verfahren und eine Vorrichtung zur Ultraschallprüfung einer Schweissung einer Elektroschweissmuffe für Kunststoffrohre mit den folgenden Schritten und Bestandteilen:
- Befestigen einer Prüfvorrichtung am Aussenumfang des verschweissten Kunststoffrohres, wobei die Prüfvorrichtung beinhaltet: ein rundum verlaufendes Befestigungselement, eine Halterung und ein Leitelement,
- Einspeisen einer Flüssigkeit in die Aussparung des Leitelements.

Die zerstörungsfreie Untersuchung von Prüfobjekten mittels Ultraschall ist Stand der Technik und wird in vielen Bereichen wie z. B. im Flugzeugbau eingesetzt.
Dieses Verfahren wird hauptsächlich bei metallischen Werkstoffen angewandt da diese eine gute Schallleitfähigkeit aufweisen.
Die Ultraschallprüfung soll dem Auffinden von inneren und äusseren Fehlern dienen, die ohne eine Zerstörung des Prüfobjekts nicht erkennbar wären.

Die CN 110031549 A1 offenbart eine Vorrichtung zur Überprüfung der Schweissnaht von miteinander stumpfverschweissten Rohren.
Nachteilig an dieser Ausführungsform ist, dass sie sich nicht für Ultraschallprüfungen für Elektroschweissmuffen eignet.

Es ist Aufgabe der Erfindung ein Verfahren und eine damit verbundene Vorrichtung vorzuschlagen, die es ermöglicht eine Ultraschallprüfung von mittels einer Elektroschweissmuffe verschweissten Rohren durchzuführen.

Diese Aufgabe wird erfindungsgemäss dadurch gelöst, dass das Leitelement im zentralen Bereich eine durchgehende Aussparung aufweist und an der Unterseite des Leitelements ein komprimierbares Stauelement angeordnet ist, wobei das Stauelement zur Stauung der in das Leitelement eingespeisten Flüssigkeit dient, wobei die Aussparung im Leitelement komplett mit der Flüssigkeit gefüllt wird und eine konstante Flüssigkeitssäule während der Ultraschallprüfung im Leitelement aufrecht gehalten wird um den Ultraschall zu übertragen.

Es ist vorteilhaft, wenn während des Prüfvorgangs konstant Flüssigkeit in das Leitelement eingespeist wird. Da während der Prüfung keine absolute Dichtheit zwischen dem Leitelement und der Elektroschweissmuffe auf der das Leitelement aufliegt und an deren Umfang das Leitelement rotiert, muss dennoch eine über den kompletten Prüfvorgang vorhandene Flüssigkeitssäule in der Aussparung des Leitelements bestehen um den Ultraschall in die Elektroschweissmuffe bzw. an die Schweissstelle zu leiten.

Um eine Prüfung der Verschweissung der Elektroschweissmuffe am Rohr durchzuführen wird die Prüfvorrichtung vorzugsweise um die Muffe und das damit verschweisste Rohr gedreht. Dadurch kann eine solche Prüfung an bereits verbauten Elektroschweissmuffen in Rohrleitungssystemen erfolgen.

Vorzugsweise beträgt die Drehung der Prüfvorrichtung mindestens 360°. Dies gewährleistet eine komplette Überprüfung der Schweissung.

Die erfindungsgemässe Prüfvorrichtung für eine Ultraschallprüfung einer Schweissung einer Elektroschweissmuffe für Kunststoffrohre beinhaltet ein rundum verlaufendes Befestigungselement, eine Halterung und ein Leitelement, wobei das Leitelement dem Leiten des Ultraschalls in die Schweissung dient, wobei die Halterung die Verbindung zwischen rundum verlaufendem Befestigungselement und Leitelement ist. Das Leitelement weist im zentralen Bereich eine durchgehende Aussparung auf und an der Unterseite des Leitelements ist ein komprimierbares Stauelement angeordnet, wobei das Stauelement zur Stauung der in das Leitelement eingespeisten Flüssigkeit dient. Das Leitelement wird mittels der Prüfvorrichtung um den Aussenumfang der Elektroschweissmuffe rotiert um die komplette Schweissnaht zu überprüfen. Da sich eine Flüssigkeit in der Aussparung des Leitelements befindet, welche durchgehend offen ist und somit die Flüssigkeit die Mantelfläche der Elektroschweissmuffe kontaktiert, tritt durch die Rotation ein Flüssigkeitsverlust auf. Eine absolute Dichtheit zwischen dem Leitelement und dem Aussenumfang der Elektroschweissmuffe ist aufgrund der Unebenheiten am Aussenumfang kaum machbar. Um jedoch eine konstante Flüssigkeitssäule in der Aussparung aufrecht zu halten, wird der Flüssigkeitsverlust mittels dem Stauelement möglichst geringgehalten.

Es ist vorteilhaft wenn die Oberfläche der durchgehenden Aussparung aus Polyamid (PA) ist. Das bedeutet, dass die Flüssigkeitssäule von Polyamid umgeben ist. Das Leitelement kann auch aus einem Polyamid hergestellt sein wie aber auch die Möglichkeit besteht, dass das Leitelement aus einem anderen Material gebildet ist und dass dann ein Einsatz aus Polyamid in das Leitelement eingebracht ist der die durchgehende Aussparung bildet. Vorzugsweise erstreckt sich das Polyamid in Form eines Randes in das Stauelement hinein bzw. das Stauelement umgibt einen schmalen überstehenden Rand, so dass der Rand an der Muffe aufliegt und das Stauelement hauptsächlich Unebenheiten überbrückt. Durch die einheitliche Oberfläche aus Polyamid, welche die Flüssigkeit umgibt, ist die Signalqualität des Ultraschalls aufgrund der konstant gleichen Schalleigenschaften sehr gut.

Vorzugsweise ist das Stauelement aus einem schwammartigen Material hergestellt, speziell bevorzugt ein Schwamm. Dadurch können Unebenheiten an der Mantelfläche der Elektroschweissmuffe ausgeglichen werden. Das Stauelement liegt so in vertieften Rillen wie auch auf Erhebungen an der Mantelfläche auf und staut die Flüssigkeit in der Aussparung, wobei konstant Flüssigkeit in das Leitelement eingespeist wird um die austretende Flüssigkeit trotz Stauelement auszugleichen und die Flüssigkeitssäule aufrecht zu halten.

Es ist vorteilhaft, wenn das rundum verlaufende Befestigungselement als Kette ausgebildet ist, wobei die Standard-Kettenglieder vorzugsweise einen Haken und eine Hakenaufnahme aufweisen und miteinander verhakt sind. Dadurch, dass das Befestigungselement als Kette ausgebildet ist, kann das Befestigungselement an bereits bestehende Rohrleitungen montiert bzw. umgelegt und geschlossen werden wie auch, dass sie beliebig verlängerbar und verkürzbar ist. Durch die Haken und Hakenaufnahme können die Standard-Kettenglieder durch blosses gegenseitiges einhängen miteinander verbunden werden.

Eine vorteilhafte Ausgestaltung der erfindungsgemässen Prüfvorrichtung besteht darin, dass die Halterung einen Support aufweist, wobei der Support, als Kettenglied ausgebildet ist und durch verhaken in die Kette integriert ist. Der Support weist vorzugsweise einen Winkelgeber auf der den Rotationswinkel der Prüfvorrichtung überwacht. Als vorteilhaft hat sich auch gezeigt, wenn Antirutschelemente an der Halterung angeordnet sind, wodurch bei vertikal verlegten Rohrleitungen das Abrutschen der Prüfvorrichtung verhindert wird. Vorzugsweise sind diese als runde Scheiben am Gelenk der Halterung angeordnet und kontaktieren die Mantelfläche der Rohrleitung.

Vorzugsweise ist an der Halterung ein Greifer angeordnet, wobei am Greifer das Leitelement befestigt ist. Vorzugsweise weist der Greifer Befestigungsstreben auf an denen das Leitelement befestigt und entsprechend positioniert wird da die Prüfvorrichtung für unterschiedliche Elektroschweissmuffen und unterschiedliche Durchmesser einsetzbar ist.

Vorzugsweise weist die Halterung eine Führung auf an der der Greifer angeordnet ist. Durch diese Führung ist der Greifer parallel zur Rohrleitungsachse einstellbar. Um das Leitelement auf der Höhe der Schweissnaht, welche nicht sichtbar ist da die Schweissnaht in der Muffe zwischen Mutter und Rohraussenumfang entsteht, zu positionieren weist das Leitelement vorzugsweise einen Anschlag auf welcher an der Muffe angeschlagen wird, wodurch das Leitelement richtig positioniert ist.

Alle Ausgestaltungmöglichkeiten sind untereinander frei kombinierbar sowie alle zum Verfahren genannten Merkmale mit der Prüfvorrichtung kombiniert werden können wie auch umgekehrt.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht einer befestigten erfindungsgemässen Prüfvorrichtung,

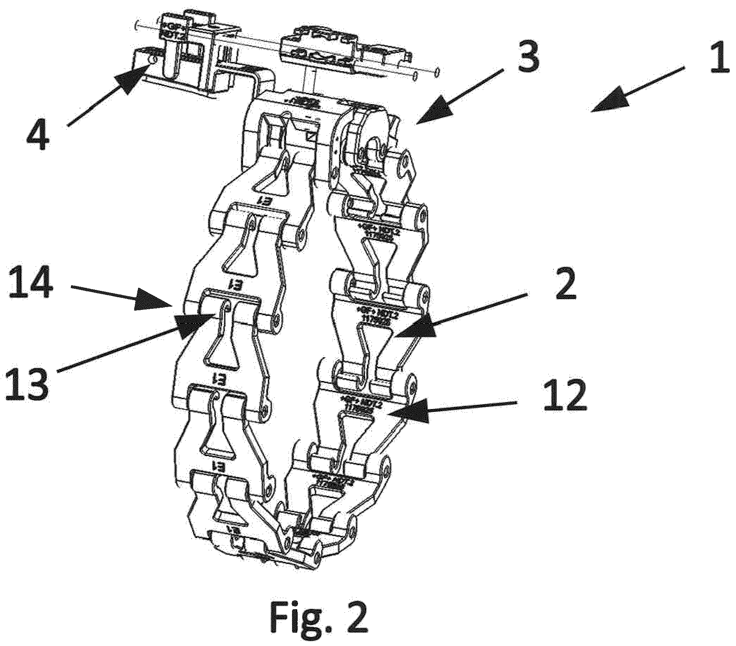

- Fig. 2: eine dreidimensionale Ansicht einer erfindungsgemässen Prüfvorrichtung,

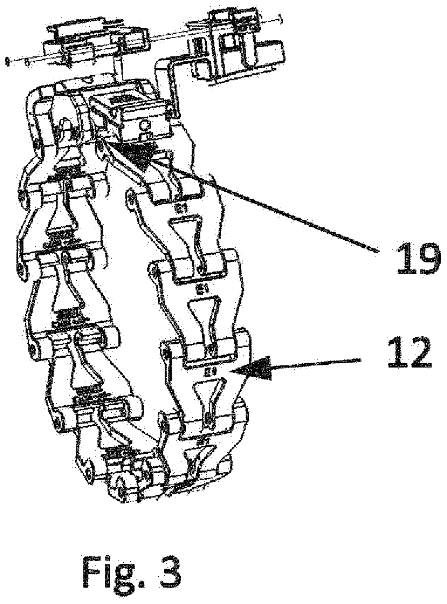

- Fig. 3: eine dreidimensionale Ansicht einer erfindungsgemässen Prüfvorrichtung,

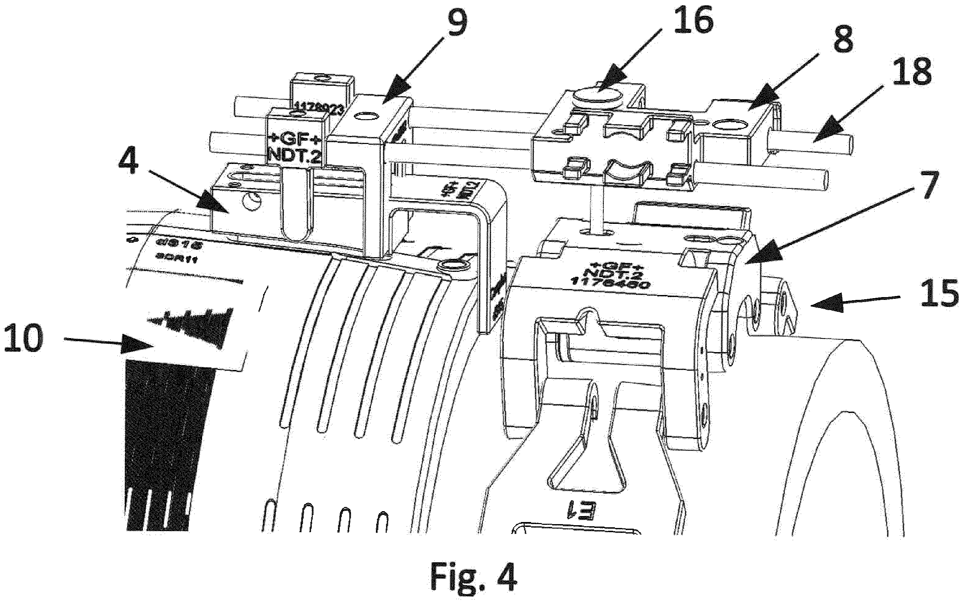

- Fig. 4: eine dreidimensionale Ansicht der Halterung mit Leitelement einer befestigten Prüfvorrichtung,

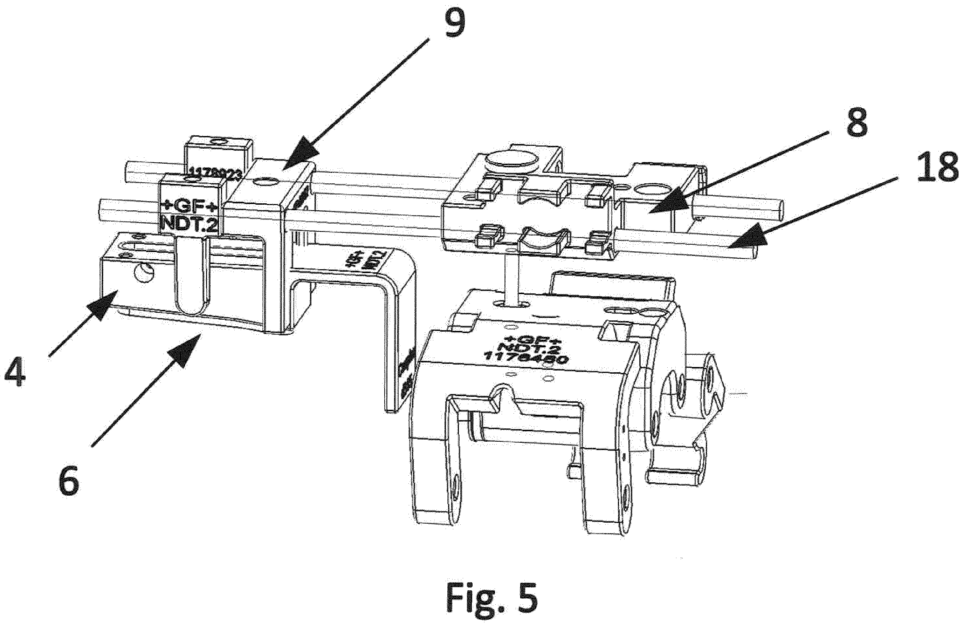

- Fig. 5: eine dreidimensionale Ansicht der Halterung mit Leitelement,
- Fig. 6: eine dreidimensionale Ansicht eines Leitelements und
- Fig. 7: einen Längsschnitt durch ein Leitelement.

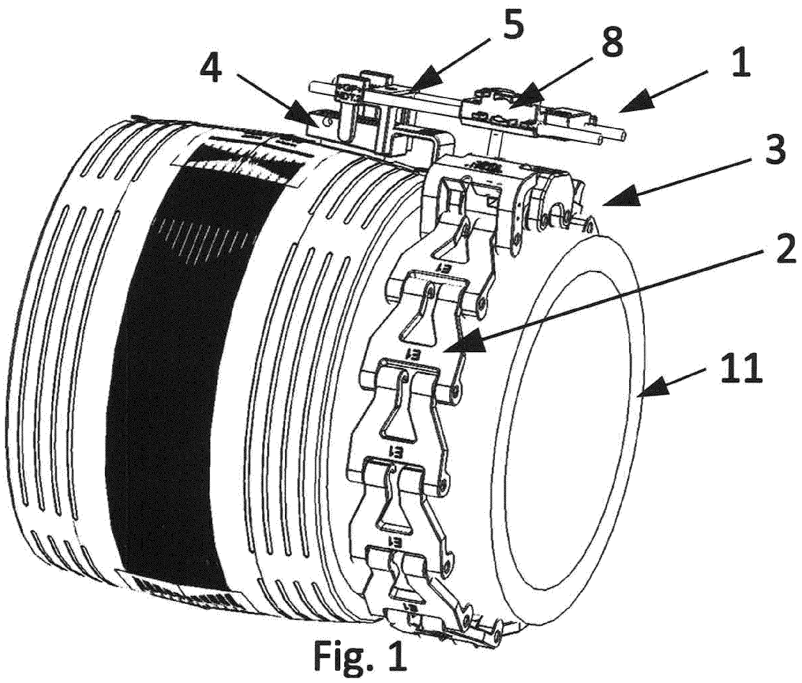

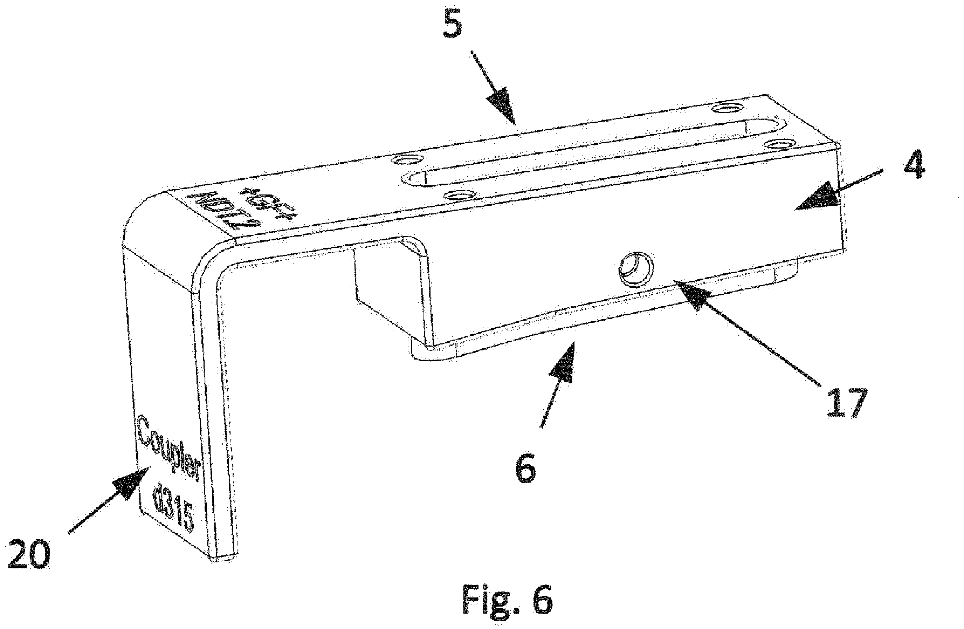

Die in Fig. 1 dargestellte Zeichnung zeigt eine erfindungsgemässe Prüfvorrichtung 1 für eine Ultraschallprüfung einer Schweissung einer Elektroschweissmuffe 10 für Kunststoffrohre 11. Die Prüfvorrichtung 1 weist ein rundum verlaufendes Befestigungselement 2 auf, wobei dieses zur Prüfung um das Kunststoffrohr 11 gelegt wird. Vorzugsweise ist das Befestigungsmittel 2 als Kette ausgebildet und weist Standard-Kettenglieder 12 auf. Die Kettenglieder 12 weisen vorzugsweise Haken 13 und Hakenaufnahmen 14 auf, wodurch die Glieder 12 durch blosses Einhaken miteinander verbunden sind und keine Verschraubungen aufwendig angezogen oder gelöst werden müssen. Dies hat den Vorteil, dass die Kette 2 schnell montiert bzw. auf die Länge angepasst werden kann. Die erfindungsgemässe Prüfvorrichtung 1 weist eine Halterung 3 auf, wobei die Halterung 3 am rundum verlaufenden Befestigungselement 2 angeordnet ist. Vorzugsweise weist die Halterung 3 einen Support 7 auf der als Kettenglied ausgebildet ist und dadurch einfach in die Kette 2 adaptierbar bzw. verhakbar ist. Vorzugsweise ist an der Halterung 3 auch ein Winkelgeber 15 angeordnet, welcher den Winkel erfasst über den die Prüfung stattfindet und auch gewährleistet, dass eine 360° Prüfung erfolgt. Die Halterung 3 weist vorzugsweis einen Träger 8 auf, wobei dieser mit Hilfe einer Einstelleinheit 16 das Einstellen des Anpressdrucks des Leitelements 4 auf die Mantelfläche der Elektroschweissmuffe 10 justiert wie aber auch als Support für die Flüssigkeitsregelung und Zuleitung dient indem ein Schlauch und Ventil (nicht dargestellt) daran befestigt sind der die Flüssigkeit dem Leitelement 4 einspeist. Das an der Prüfungsvorrichtung 1 angeordnete Leitelement 4 dient dem Übertragen des Ultraschalls in die Elektroschweissmuffe 10 bzw. zur Schweissung darin. Das Leitelement 4 ist an der Halterung 3 befestigt und dadurch einstellbar. Das Ultraschallprüfgerät (nicht sichtbar) wird an der Oberseite des Leitelements 4 angebracht wodurch der Ultraschall ungefähr senkrecht auf die Mantelfläche der Elektroschweissmuffe 10 gerichtet ist und durch die Aussparung 5, gut sichtbar in Fig. 6, im Leitelement 4 verläuft, wobei diese Aussparung 5 mit einer Flüssigkeit gefüllt ist. An der Unterseite des Leitelements 4 ist ein Stauelement 6 angeordnet, welches die Flüssigkeit zur Übertragung des Ultraschalls in der Aussparung 5 staut um eine Flüssigkeitssäule aufrecht zu halten. Zudem wird über die Einspeisung 17 die Flüssigkeit in das Leitelement 4 eingespeist um den Verlust der Flüssigkeit während der Prüfung auszugleichen.

Das Leitelement 4 ist vorzugsweise an einem Greifer 9 einstellbar angeordnet. Es ist vorteilhaft wenn der Greifer an einer Führung 18 angeordnet ist, wobei die Führung 18 parallel zur Rohrachse verläuft und vorzugsweise mit dem Träger 8 verbunden ist. An der Halterung 3 sind vorzugsweise Antirutschelemente 19 angeordnet, diese verhindern, dass bei einer vertikalverlaufenden Rohrleitung die erfindungsgemässe Prüfvorrichtung 1 hinunterrutscht.

Das Leitelement 4 weist zur korrekten Positionierung an der Elektroschweissmuffe 10 einen Anschlag 20 auf, dadurch ist es direkt oberhalb der Schweissnaht positioniert.

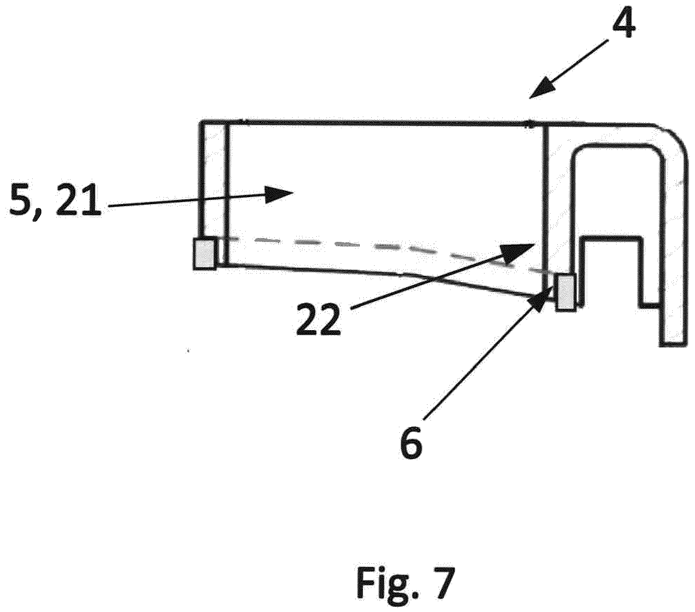

Fig. 7 zeigt das Leitelement 4 im Längsschnitt. Die Oberfläche 21 der Aussparung 5 ist aus einem Polyamid, wobei hier das Leitelement 4 einteilig dargestellt ist. Alternativ kann die Oberfläche 21 auch durch einen Einsatz gebildet werden der in das Leitelement 4 eingesetzt ist wodurch das Leitelement nicht denselben Werkstoff aufweisen muss. Vorteilhaft ist es wenn ein Rand 22 in das Stauelement 6 hineinragt. Dadurch wird die Flüssigkeitssäule nur von PA umgeben was eine gute Signalqualität gewährleistet.

### Bezugszeichenliste

- 1: Prüfvorrichtung
- 2: Rundum verlaufendes Befestigungselement
- 3: Halterung
- 4: Leitelement
- 5: Aussparung Leitelement
- 6: Stauelement
- 7: Support
- 8: Träger
- 9: Greifer
- 10: Elektroschweissmuffe
- 11: Kunststoffrohr
- 12: Standard-Kettenglied
- 13: Haken
- 14: Hakenaufnahme
- 15: Winkelgeber
- 16: Einstelleinheit
- 17: Einspeisung
- 18: Führung
- 19: Antirutschelement
- 20: Anschlag
- 21: Oberfläche Aussparung PA
- 22: Rand

## Patentansprüche

1. Verfahren zur Ultraschallprüfen einer Schweissung einer Elektroschweissmuffe (10) für Kunststoffrohre (11) mit den folgenden Schritten:
• Befestigen einer Prüfvorrichtung (1) am Aussenumfang des verschweissten Kunststoffrohres (11) beinhaltend ein rundum verlaufendes Befestigungselement (2), eine Halterung (3), wobei die Halterung (3) vorzugsweise einen Support (7), einen Träger (8) und einen Greifer (9) aufweist und ein Leitelement mit einer Aussparung,
• Einspeisen einer Flüssigkeit in die Aussparung (5) des Leitelements (4) vorzugsweise Wasser,
**dadurch gekennzeichnet, dass** die Aussparung (5) im Leitelement (4) komplett mit der Flüssigkeit gefüllt wird und eine konstante Flüssigkeitssäule während der Ultraschallprüfung im Leitelement (4) aufrecht gehalten wird um den Ultraschall zu übertragen.

2. Verfahren nach Anspruch 1, **dadurch gekennzeichnet, dass** während des Prüfvorgangs konstant Flüssigkeit in das Leitelement (4) eingespeist wird.

3. Verfahren nach einem der Ansprüche 1 oder 2, **dadurch gekennzeichnet, dass** die Prüfvorrichtung (1) zur Prüfung der Schweissung um das Kunststoffrohr (11) und die Elektroschweissmuffe (10) gedreht wird.

4. Verfahren nach einem der Ansprüche 1 bis 3, **dadurch gekennzeichnet, dass** die Drehung der Prüfvorrichtung (1) mindestens 360° beträgt

5. Prüfvorrichtung (1) für eine Ultraschallprüfen einer Schweissung einer Elektroschweissmuffe (10) für Kunststoffrohre (11) beinhaltend ein rundum verlaufendes Befestigungselement (2), eine Halterung (3) und ein Leitelement (4), wobei das Leitelement (4) dem Leiten des Ultraschalls in die Schweissung dient, wobei die Halterung (3) die Verbindung zwischen rundum verlaufendem Befestigungselement (2) und Leitelement (4) ist, **dadurch gekennzeichnet, dass** das Leitelement (4) im zentralen Bereich eine durchgehende Aussparung (5) aufweist und an der Unterseite des Leitelements (4) ein komprimierbares Stauelement (6) angeordnet ist, wobei das Stauelement (6) zur Stauung der in das Leitelement (4) eingespeisten Flüssigkeit dient.

6. Prüfvorrichtung (1) nach Anspruch 5, **dadurch gekennzeichnet, dass** die Oberfläche der durchgehenden Aussparung (5) aus Polyamid (PA) ist.

7. Prüfvorrichtung (1) nach einem der Ansprüche 5 oder 6, **dadurch gekennzeichnet, dass** das Stauelement (6) aus einem schwammartigen Material besteht.

8. Prüfvorrichtung nach einem der Ansprüche 5 bis 7, **dadurch gekennzeichnet, dass** das rundum verlaufende Befestigungselement als Kette ausgebildet ist, wobei die Standard-Kettenglieder vorzugsweise einen Haken und eine Hakenaufnahme aufweisen und miteinander verhakt sind.

9. Prüfvorrichtung (1) nach Anspruch 8, **dadurch gekennzeichnet, dass** die Halterung (3) einen Support (7) aufweist, wobei der Support (7), als Kettenglied ausgebildet ist und durch verhaken in die Kette integriert ist.

10. Prüfvorrichtung (1) nach einem der vorangehenden Ansprüche **dadurch gekennzeichnet, dass** die Halterung (3) einen Greifer (9) aufweist, wobei der Greifer (9) das Leitelement (4) aufnimmt.

11. Prüfvorrichtung (1) nach einem der vorangehenden Ansprüche **dadurch gekennzeichnet, dass** der Greifer (9) über eine Führung positionierbar ist.
